# EUROPÄISCHE PATENTSCHRIFT

(11) **EP 2 208 606 B1**
(45) Veröffentlichungstag und Bekanntmachung des Hinweises auf die Patenterteilung: **03.07.2013**
(21) Anmeldenummer: 10150710.1
(22) Anmeldetag: 14.01.2010
(51) Int. Cl.: B29C 49/48, B29C 35/00, F28D 15/00, B29C 49/78, B29C 33/02, B29C 33/04, B29C 35/02, B29C 35/16, B29C 49/64

(54) **Streckblasmaschine mit beheizbarer Blasform und Verfahren zu deren Temperierung**
Stretch blow moulding machine with heatable blow mould and method of its tempering
Machine de soufflage-étirage dotée d'un moule de soufflage pouvant être chauffé et son procédé de régulation de température

(30) Priorität: 15.01.2009 DE 102009005142
(43) Veröffentlichungstag der Anmeldung: 21.07.2010
(73) Patentinhaber: Krones AG, 93073 Neutraubling (DE)
(72) Erfinder: Dachs, Alexander, D-93053, Regensburg (DE); Fischer, Simon, 84513, Töging (DE)
(74) Vertreter: Bittner, Bernhard

(56) Entgegenhaltungen:
- EP-A1- 1 537 976
- WO-A2-2005/123357
- DE-A1-102005 000 681
- DE-C1- 4 325 559
- US-A1- 2001 051 192

## Beschreibung

Die vorliegende Erfindung bezieht sich auf eine beheizbare Blasform. Aus dem Stand der Technik ist es seit langem bekannt, Kunststoffvorformlinge, insbesondere aus PET, mit Hilfe einer Blasformeinrichtung durch Beaufschlagung mit Druckluft zu Kunststoffbehältnissen zu expandieren. Dabei ist auch bekannt, dass derartige Blasformen bzw. die sie haltenden Formträger dadurch erwärmt werden, dass ein flüssiges Heizmittel durch sie strömt.

Aus der DE 103 57 247 A1 ist ein Verfahren und eine Vorrichtung zur Bearbeitung von Werkstücken bekannt. Dabei werden die zu bearbeitenden Werkstücke in eine Bearbeitungsstation eingesetzt und die Bearbeitungsstation wird auf einem rotierenden Tragrad bewegt. Auf dem Tragrad wird mindestens ein Temperiermedium zur Temperierung eines Bereichs der Bearbeitungsstation verwendet, wobei die Temperatur dieses Temperiermediums durch einen Temperaturregler auf dem Tragrad vorgegeben ist.

Die EP 1 717 004 A1 beschreibt eine Vorrichtung und ein Verfahren zur Temperierung von Formwerkzeugen. Dabei sind ebenfalls in dem Formwerkzeug Temperierkanäle für wenigstens ein Temperiermedium vorgesehen, wobei jeder Temperiermedienkanal einer Zone des Formwerkzeugs zugeordnet ist, so dass die Temperatur einer Zone unabhängig von der Temperatur einer anderen Zone geregelt werden kann. Weiterhin sind Temperaturfühler zur Bestimmung der Temperatur des Temperiermediums vorgesehen.

Die DE 43 193 19 C2 beschreibt eine Anlage zur taktgesteuerten Beheizung von Verbrauchern und insbesondere von Formen zur Verschmelzung von Kunststoffen. Dabei ist auch hier eine Wärmeträgerflüssigkeit vorgesehen, die unter Einhaltung eines vorgegebenen Temperaturprofils für jeden Takt einem Heizkreislauf mit einem Behälter und einem Erhitzer zugeführt wird.

Aus der EP 1 537 976 A1 ist ein Verfahren und eine Vorrichtung zur Bearbeitung von Werkstücken bekannt. Dabei wird die Temperatur eines Temperiermediums durch einen Temperaturregler auf einem Tragrad vorgegeben.

Für Streckblasmaschinen, auf welche sich die Erfindung insbesondere bezieht, und welche PET-Behälter zur Heißabfüllung herstellen, werden zur thermischen Konditionierung des PET und zur Stabilisierung der mechanischen Komponenten mehrere Temperierkreise eingesetzt. Die betroffenen Bauteile innerhalb der Streckblasmaschine sind dabei insbesondere die Formwände, der Formboden und der Formträger. Die Formwände bzw. die Seitenwände oder Formhälften werden, teilweise mittels Schalen, im Formträger aufgenommen und sind meist gegenüber diesem bestmöglich isoliert. Der Formboden wird mechanisch in den Formhälften oder Schalen gehalten.

Zwischen den Formwänden und dem Formträger besteht thermischer Kontakt über die meist dazwischen liegende Isolierung. Der Formboden steht seitlich in vergleichsweise geringem Kontakt zu den Formwänden. Aus dem Stand der Technik ist eine Temperierung für eine abweichende Zieltemperatur für alle drei Teile der oben genannten Komponenten vorgesehen. Dabei liegen typische Temperaturen für den Formträger zwischen 50° und 60° Celsius und für den Formboden zwischen 60° und 90° Celsius. Dies ermöglicht den einfachen Einsatz von Wassertemperiergeräten. Die Formwand wird typischerweise auf bis zu 160° Celsius temperiert, was zum Einsatz von Öltemperierkreisläufen führt.

Damit werden im Stand der Technik zwei Wassertemperiergeräte für die Formträger- und Formbodenkreisläufe eingesetzt, sowie ein Öltemperiergerät für den Formwandkreislauf.

Diese Temperiergeräte weisen dabei typischerweise elektrische Heizeinrichtungen auf und weiterhin oftmals auch einen Wärmetauscher, der von Kühlmittel durchströmt wird. Damit wird für Temperiergeräte ein Heiz- und Kühlmodus ermöglicht.

Der vorliegenden Erfindung liegt daher die Aufgabe zugrunde, eine Vorrichtung zu schaffen, welche im Vergleich zum Stand der Technik mit geringeren Betriebskosten, Investmentkosten und Montageaufwand auskommt. Dies wird erfindungsgemäß durch die Vorrichtung nach Anspruch 1 erreicht. Vorteilhafte Ausführungen und Weiterbildungen sind Gegenstand der Unteransprüche.

Eine erfindungsgemäße Vorrichtung zum Umformen von Kunststoffvorformlingen zu Kunststoffbehältnissen weist eine Blasform auf, die innerhalb eines Formträgers angeordnet ist, wobei die Blasform wenigstens eine Seitenwand bzw. eine Formwand und einen Boden aufweist, gegen welche die Kunststoffvorformlinge expandierbar sind und wobei wenigstens ein erster Fluidkreislauf vorgesehen ist, um die Seitenwand zu erwärmen bzw. zu temperieren, wenigstens ein weiterer Fluidkreislauf, um den Boden zu erwärmen bzw. zu temperieren und wobei in wenigstens einem Fluidkreislauf wenigstens eine Heizeinrichtung vorgesehen ist, um das in diesem Fluidkreislauf fließende Fluid zu erwärmen.

Es wird darauf hingewiesen, dass die einzelnen Fluidkreisläufe dazu dienen, um die jeweiligen Bestandteil der Maschinen zu unterschiedlichen Phasen während des Arbeitsbetriebs zu temperieren, beispielsweise um sie in einer Aufheizphase und ggfs. auch in einer Betriebsphase zu erwärmen, aber auch dazu, um sie in einer Abkühlphase abzukühlen.

Erfindungsgemäß ist ein erster Wärmetauscher vorgesehen, welcher Wärme wenigstens zeitweise von dem ersten Fluidkreislauf in wenigstens einen der weiteren Fluidkreisläufe überträgt. In anderen Betriebsphasen der Vorrichtung, beispielsweise einer Abkühlphase, kann der Wärmetauscher auch dazu dienen, um dem ersten Fluidkreislauf Wärme zu entziehen.

Während im Stand der Technik separate Heizeinrichtungen vorgesehen sind, um die einzelnen Fluide in den Fluidkreisläufen zu erwärmen, wird damit erfindungsgemäß vorgeschlagen, dass eine Heizeinrichtung zumindest indirekt zur Erwärmung des Fluids in einem weiteren Fluidkreislauf dient, wobei hierzu der Wärmetauscher eingesetzt wird. Bei den Fluiden handelt es sich insbesondere um Flüssigkeiten.

Durch aufwendige Messungen an den einzelnen Temperierkreisen wurde festgestellt, dass in der Betriebsphase einer Streckblasmaschine die Wassertemperierkreisläufe für den Formboden und den Formträger hauptsächlich im Kühlmodus operieren. Dies ist bedingt durch den thermischen Kontakt zu der wärmen Formwand bzw. Seitenwand (für den Formträger) und die über den beheizten Vorformling eingebrachte Energie (insbesondere für den Formboden). Zusätzlich konnte festgestellt werden, dass es teilweise zu einer übermäßig langen Abkühlphase für die Vorrichtung, insbesondere in Form einer Streckblasmaschine, kommt. Vorzugsweise ist die Wärmetauschereinrichtung die einzige Wärmequelle des weiteren Fluidkreislaufs.

Wie oben erwähnt, wurden bislang drei Temperiergeräte bzw. Heizeinrichtungen zum Betrieb von Streckblasmaschinen zur Herstellung von heiß befüllbaren PET-Behältern eingesetzt. In der beschriebenen Ausführungsform sollen wenigstens eine bzw. wenigstens zwei dieser Temperiergeräte durch vereinfachte an den ersten Fluidkreislauf gekoppelte passive Kreisläufe ersetzt werden. Unter einem passiven Fluidkreislauf wird dabei ein Kreislauf verstanden, der keine eigene Heizeinrichtung aufweist, sondern über einen Wärmetauscher mittelbar durch einen weiteren Fluidkreislauf beheizt wird. Bei einer weiteren vorteilhaften Ausführungsform weist die Vorrichtung lediglich eine aktive (d.h. insbesondere Energie umwandelnde und bevorzugt elektrisch betriebene) Heinzeinrichtung auf und es sind daher Wärmetauscher vorgesehen, um die Wärmeenergie des ersten Fluidkreislaufes auf die beiden anderen Fluidkreisläufe zu übertragen. Im vorliegenden wird eine Vorrichtung beschrieben, bei der an einen Ölfluidkreislauf über den Wärmetauscher ein Wasserfluidkreislauf gekoppelt wird. Entsprechend wäre es jedoch auch möglich, zweier Wassertemperierkreisläufe aneinander zu koppeln. Durch entsprechende Verschaltung der Komponenten kann die beschriebene Funktionalität auch mit einem Wasserkreislauf realisiert werden.

Ein weiterer Vorteil des Einsatzes der besagten Wärmetauscher ergibt sich dadurch, dass als zusätzlicher Nutzen der Wärmeaustausch zwischen den einzelnen Kreisläufen genutzt werden kann, um ein schnelleres Abkühlen der Streckblasmaschine zu erzielen. Hieraus wiederum resultierten direkt verkürzte Produktwechselzeiten für die Vorrichtung und insbesondere eine Streckblasmaschine.

Bevorzugt sind sämtliche verbleibenden Komponenten, besonders bevorzugt auch inklusive einer Ansteuerung und einer Regelung in einem Gerät integriert. Die Aufstellung und Montage bei Inbetriebnahme aller Komponenten wird auf diese Weise schneller und einfacher.

Weiterhin werden durch die Kürzung beispielsweise der aktiven Heizelemente und der Integration der Steuerung und Regelung entsprechende Kosteneinsparungen möglich.

Bei einer bevorzugten Ausführungsform ist wenigstens ein zweiter Fluidkreislauf, um den Formträger zu erwärmen bzw. zu temperieren, vorgesehen. Der oben erwähnte weitere Fluidkreislauf stellt in diesem Falle einen dritten Fluidkreislauf dar.

Bei einer weiteren bevorzugten Ausführungsform sind die besagten Fluidkreisläufe wenigstens teilweise außerhalb der Vorrichtung bzw. insbesondere wenigstens teilweise außerhalb der Formträgeranordnung vorgesehen. Bevorzugt sind die Wärmetauscher außerhalb der besagten Formträgeranordnung angeordnet.

Bei einer weiteren vorteilhaften Ausführungsform weist die Vorrichtung einen zweiten Wärmetauscher auf, welcher Wärme von dem ersten Fluidkreislauf in den dritten Fluidkreislauf überträgt. Auch könnte ein zweiter oder weiterer Wärmetauscher vorgesehen sein, welcher Wärme von dem zweiten Fluidkreislauf in den dritten Fluidkreislauf überträgt.

Bei einer weiteren vorteilhaften Ausführungsform strömen in wenigstens zwei unterschiedlichen Fluidkreisläufen unterschiedliche Fluide. Dabei kann es möglich sein, dass in einem ersten Fluidkreislauf Öl verläuft, und auf diese Weise auch eine Temperierung auf erheblich über 100° Celsius erreicht wird. In den beiden anderen Fluidkreisläufen kann beispielsweise Wasser als Wärmeträgerfluid verlaufen. Es wäre jedoch auch möglich, dass es sich bei dem zweiten und/oder dritten Fluidkreislauf ebenfalls um einen Ölfluidkreislauf handelt.

Bei einer weiteren vorteilhaften Ausführungsform ist wenigstens ein Wärmetauscher in einem Rücklauf der ersten Fluidkreislaufs angeordnet. Auf diese Weise wird durch eine Aktivierung des Wärmetauschers die Beheizung der Seitenwände bzw. Formwände der Blasform nicht beeinflusst, da die wärmeentziehende Wirkung erst im Rücklauf dieses Kreislaufs auftritt.

Bei einer weiteren vorteilhaften Ausführungsform ist in der Strömungsrichtung des Fluids in dem ersten Fluidkreislauf zunächst der erste Wärmetauscher und anschließend der zweite Wärmetauscher angeordnet. Damit sind bevorzugt sowohl der erste auch als der zweite Wärmetauscher in einem Rücklauf des ersten Fluidkreislaufs vorgesehen.

Bei einer weiteren vorteilhaften Ausführungsform sind Steuermittel zum Steuern des Durchflusses des in dem ersten Fluidkreislauf durch wenigstens einen Wärmetauscher strömenden Fluids vorgesehen. Bei diesen Steuermitteln kann es sich dabei um Ventile, beispielsweise Rückschlagventile oder auch Drosselventile und dergleichen handeln. Durch den Einsatz dieser Ventile, die bevorzugt steuerbar sind, ist eine Aktivierung der entsprechenden Wärmetauscheinrichtungen je nach Bedarf möglich.

Bei einer weiteren vorteilhaften Ausführungsform agiert die Regelung in der Aufheizphase derart, dass alle Komponenten zum gleichen Zeitpunkt die gewünschte Solltemperatur erreichen. Dabei kann die abgeführte Wärmemenge in die passiven Kreisläufe durch die vorher genannten Steuermittel kontrolliert werden.

Bei einer weiteren vorteilhaften Ausführungsform wird beim Abkühlvorgang der Wärmestrom durch mindestens einen der Wärmetauscher so gesteuert, dass das zu erwärmende Medium eine bestimmte Temperatur nicht überschreitet. Dies kann z. B. die Verdampfungstemperatur des Mediums sein.

Bei einer weiteren vorteilhaften Ausführungsform weist die Vorrichtung einen Kühlkreislauf auf. Dieser Kühlkreislauf kann einerseits dazu dienen, um die Heizeinrichtung selbst zu kühlen, andererseits jedoch auch, um die besagten zweiten und dritten Fluidkreisläufe mit Kühlmittel zu versorgen.

Bei einer weiteren vorteilhaften Ausführungsform ist wenigstens ein Wärmetauscher als Plattenwärmetauscher ausgeführt. Bei einer weiteren vorteilhaften Ausführungsform handelt es sich bei der Vorrichtung eine Blasmaschine und insbesondere um eine Streckblasmaschine. Es wird darauf hingewiesen, dass die vorliegende Vorrichtung insbesondere für Streckblasmaschinen besonderes vorteilhaft ist, da hier eine besonders günstige Kombinierung mit einer Erwärmung und einer anschließenden Heißabfüllung von Flüssigkeiten möglich ist.

Bei einer weiteren bevorzugten Ausführungsform ist wenigstens in dem zweiten Fluidkreislauf und/oder in dem dritten Fluidkreislauf eine Temperaturmesseinrichtung vorgesehen. Diese Temperaturmesseinrichtungen dienen zur Steuerung der jeweiligen Fluidkreisläufe.

Die vorliegende Erfindung ist weiterhin auf ein Verfahren zur Temperierung von Blasformen zum Umformen von Kunststoffvorformlingen zu Kunststoffbehältnissen gerichtet, wobei eine Seitenwand für eine Blasform mit einem ersten Fluidkreislauf temperiert und insbesondere erwärmt wird und ein Boden der Blasform mit einem weiteren Fluidkreislauf temperiert und insbesondere erwärmt wird und die Fluidkreisläufe getrennt voneinander sind. Dabei wird das Fluid in einem der Fluidkreisläufe mittels einer Heizeinrichtung erwärmt.

Erfindungsgemäß wird das wenigstens in einem der beiden anderen Fluidkreisläufe strömende Fluid mittels einem ersten Wärmetauscher erwärmt, welcher Wärme von dem aktiv erwärmten Fluidkreislauf in die weiteren Fluidkreisläufe überträgt. Damit wird auch verfahrensseitig vorgeschlagen, dass der zweite und der dritte Fluidkreislauf nicht aktiv sondern lediglich passiv über einen Wärmetauscher erwärmt werden. Auf diese Weise können, wie oben erwähnt, Kosten eingespart werden.

Vorteilhaft wird ein Formträger der Blasform mit einem zweiten Fluidkreislauf temperiert und insbesondere erwärmt und bei dem erwähnten weiteren Fluidkreislauf handelt es sich um einen dritten Fluidkreislauf.

### Weitere Vorteile und Ausführungsformen ergeben sich aus den beigefügten Zeichnungen:

Darin zeigen:
- Fig. 1: eine schematische Darstellung einer Vorrichtung nach dem Stand der Technik;
- Fig. 2: eine schematische Darstellung einer erfindungsgemäßen Vorrichtung in einer ersten Ausführungsform;
- Fig. 3: eine schematische Darstellung einer erfindungsgemäßen Vorrichtung in einer zweiten Ausführungsform; und
- Fig. 4: eine schematische Darstellung einer erfindungsgemäßen Vorrichtung in einer dritten Ausführungsform.

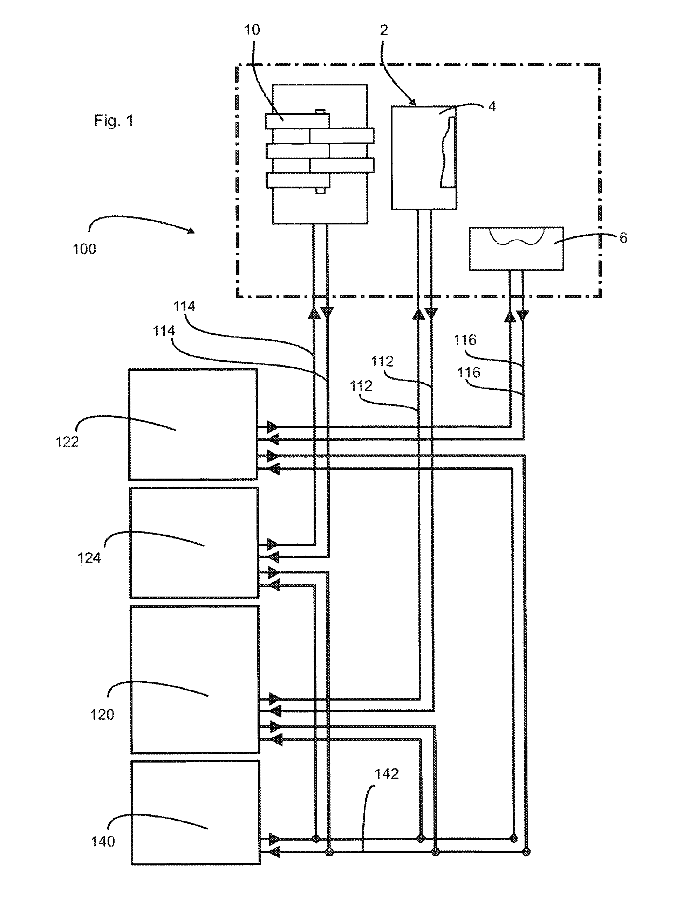

Figur 1 zeigt eine Vorrichtung 100 nach dem Stand der Technik. Diese Vorrichtung 100 weist eine in ihrer Gesamtheit mit 2 bezeichnete Blasform auf, die innerhalb eines Formträgers 10 gehalten wird. Die Blasform 2 weist dabei Seiten- bzw. Formwände 4 auf, gegen welche Kunststoffvorformlinge expandierbar sind. Weiterhin weist die Blasform eine Bodenform 6 auf, die zur Erzeugung des Bodenabschnitts der Behältnisse dient.

Diese genannten Komponenten bilden dabei in ihrer Gesamtheit eine in einem Formträger 10 angeordnete Blasform aus.

Das Bezugszeichen 112 bezieht sich auf einen ersten Fluidkreislauf, der zur Erwärmung der Seitenwände bzw. Formwände 4 der Blasform 2 dient. Dieser Fluidkreislauf 112 wird dabei von einer ersten Heizeinrichtung 120 erwärmt. Weiterhin ist ein zweiter Fluidkreislauf 114 vorgesehen, der zur Erwärmung des Formträgers 10 dient. Dieser zweite Fluidkreislauf 114 wird dabei von einer zweiten Heizeinrichtung 124 gespeist und ein dritter Fluidkreislauf 116 dient zur Erwärmung der Bodenform 6 und wird von einer dritten Heizeinrichtung 122 erwärmt. Diese drei Kreisläufe 112, 114, 116 sind dabei vollständig unabhängig voneinander und weiterhin ist eine Kühleinrichtung 140 vorgesehen, welche über einen Kühlkreislauf 142, 144 die einzelnen Heizeinrichtungen und damit auch die einzelnen Fluidkreisläufe 112, 114, und 116 kühlt.

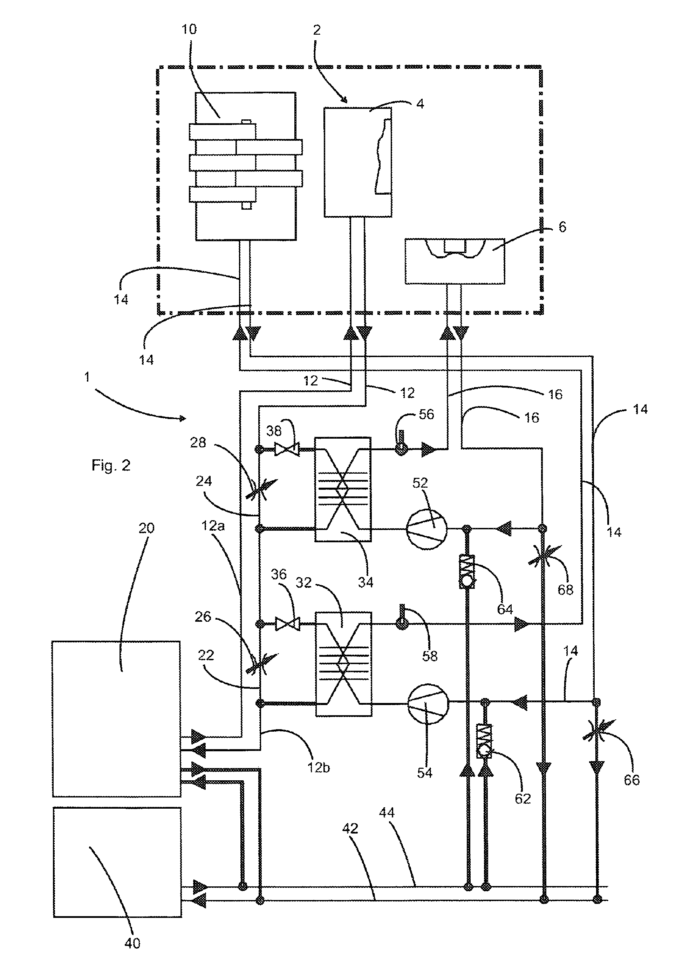

Figur 2 zeigt eine erste Ausführungsform einer erfindungsgemäßen Vorrichtung 1. Auch bei dieser Ausführung sind wiederum ein Formträger 10, Seitenwände 4 und eine Bodenform 6 vorgesehen, die mit getrennten Fluidkreisläufen beheizt werden. Das Bezugszeichen 12 bezieht sich hier auf einen ersten Fluidkreislauf, mittels dessen die Seitenwände 4 beheizt werden. Dabei wird darauf hingewiesen, dass die Seitenwände 4 die höchste Betriebstemperatur erfordern. Das Bezugszeichen 20 bezieht sich auf eine Heizeinrichtung zum Erwärmen des Fluids in dem ersten Fluidkreislauf 12.

Das Bezugszeichen 14 bezieht sich auf einen zweiten Fluidkreislauf zum Beheizen des Formträgers 10. Man erkennt, dass dieser zweite Fluidkreislauf keine eigene Heizeinrichtung aufweist sondern über einen ersten Wärmetauscher 32 an den ersten Fluidkreislauf 12 gekoppelt ist. Genauer ist dieser zweite Fluidkreislauf 14 in einem Rücklauf 12b des ersten Fluidkreislaufes 12 vorgesehen. In einem Vorlauf 12a des ersten Fluidkreislaufes ist kein entsprechender Wärmetauscher angeordnet. Das Bezugszeichen 36 bezieht sich auf eine Ventileinrichtung, genauer, ein steuerbares Ventil, welches den Durchfluss von Medium durch den ersten Wärmetauscher 32 steuern kann. Das Bezugszeichen 16 bezieht sich auf einen dritten Fluidkreislauf, der hier über einen zweiten Wärmetauscher 34 ebenso an den ersten Fluidkreislauf 12 gekoppelt wird.

Zur Wärmeübertragung zwischen den verschiedenen Fluidkreisläufen 12, 14 und 16 werden damit Wärmetauscher 32 und 34 eingesetzt, die vorzugsweise als Plattenwärmetauscher ausgeführt sind. Dabei sind vorzugsweise die Leitungsquerschnitte durch die Wärmetauscher 32 und 34 derart bemessen, dass gegenüber den Bypassstrecken 22, 24 bei maximal geöffneten Ventilen 28 und 26 keine Drosselung auftritt.

Wie gesagt, sind die beiden Wärmetauscher 32 und 34 im Rücklauf 12b des ersten Fluidkreislaufes 12 eingebracht, um durch ihren Wärmetransfer die Regelung des Temperiergerätes möglichst wenig zu beeinträchtigen. Wie in Figur 2 gezeigt, wird vorzugsweise zunächst der Wärmetauscher 34 für den Formboden 6 durchlaufen, da für diesen die höheren Temperaturen zu erwarten sind.

Im Folgenden wird die Vorrichtung aus Figur 2 für die Betriebszustände Aufheizen, Betrieb und Abkühlen beschrieben. In diesen genannten Betriebszuständen sind die beiden Pumpen 52 und 54 jeweils eingeschaltet.

Beim Aufheizen der Vorrichtung 1 bzw. des Formträgers 12, der Seitenwände 4 und des Bodens 6 sind die beiden Ventile 38 und 36 geöffnet und die beiden Ventile 66 und 68, bei denen es sich jeweils um regelbare Drosseln handelt, sind vollständig geschlossen, während mittels der beiden Ventile bzw. regelbaren Drosseln 26 und 28 die gewünschte Vorlauftemperatur mithilfe der Temperaturmesseinrichtungen 56 und 58 eingestellt wird. Dabei wird vorzugsweise die Regelung mit jeweils vollständig geöffneten Drosseln 26 und 28 begonnen. Der Sollwert der Vorlauftemperatur wird aus der gewünschten Temperatur in der entsprechenden Maschinenkomponente und einem additiven Korrekturwert, der den Temperaturabfall über der Strecke bis in die Maschine entspricht, vorgegeben. Erreichen die jeweiligen Wasserkreisläufe die Solltemperatur wechseln sie in den Betriebsmodus.

Im Betriebsmodus sind die beiden Ventile 36 und 38 vorzugsweise geschlossen und die Drosseln 26, 28 auf maximalen Durchfluss gestellt. Bevorzugt werden die Drosseln 26, 28 generell maximal geöffnet, wenn die Ventile 36 und 38 geschlossen werden. Um den Kreislauf nun bei Bedarf zu kühlen, werden die beiden Drosseln 66 und 68 geöffnet. In Folge dieser Öffnung strömt frisches Kühlmedium aus dem Kühlervorlauf 44 über die Rückschlagventile 62, 64 in den jeweiligen Temperierkreislauf bzw. Fluidkreislauf 14 und 16. Diese Art der Kühlung wird aufgrund gesteigerter Effizienz und einfacherer Ausführung der Benutzung der jeweiligen Wärmetauscher 32 und 34 vorgezogen. Falls es nötig sein sollte, könnten die Ventile 36 und 38 auch geöffnet werden, um einen passiven Kreislauf zu erwärmen.

Ein Abkühlen der Fluidkreisläufe 14 und 16 wird dadurch erreicht, dass die Ventile 36 und 38 geöffnet werden und die Drosseln 26 und 28 auf minimalen Durchfluss gestellt werden, währende die Ventile 66 und 68 auf maximalen Durchfluss regeln. Dies ist bevorzugt die Folge einer Absenkung des Sollwertes für die Temperatursensoren 56 und 58. Durch die beiden Wärmetauscher 32 und 34 wird nun zusätzlich Energie aus dem ersten Fluidkreislauf 12 d.h. den Öltemperierkreislauf 12 abgeführt. Dabei wird jedoch die Wärme zunächst nochmals durch die verschiedenen Komponenten geführt. Aufgrund der im Vergleich zu der Formwand 4 geringen thermischen Trägheit wird die Beeinträchtigung allerdings gering sein.

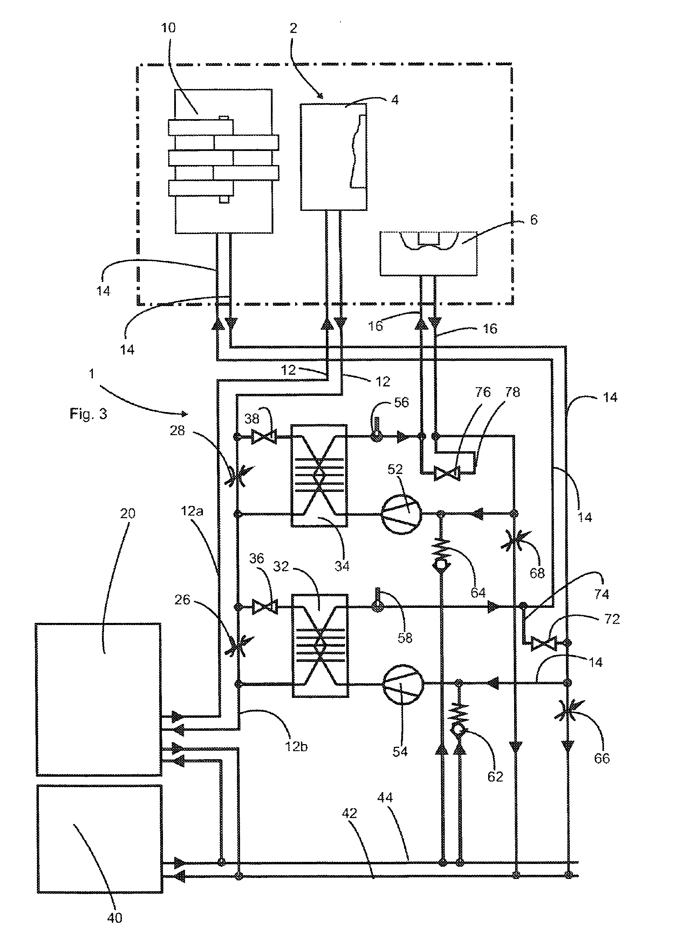

In Figur 3 ist eine weitere Ausführungsform einer erfindungsgemäßen Vorrichtung gezeigt. Im Unterschied zu der in Figur 2 gezeigten Ausführungsform sind hier zwei zusätzliche Bypässe 74 und 78 vorgesehen, welche jeweils zwischen den Rück- und Vorläufen der Kreisläufe 14 und 16 geschalten sind. Diese beiden Bypässe weisen dabei jeweils Ventile 72 und 76 auf. Mittels dieser Bypassschaltungen für die Fluidkreisläufe 14 und 16 kann zunächst der erste Fluidkreislauf 12 stark gekühlt werden (gegebenenfalls nur durch einen der Wasserkreisläufe 14, 16 und anschließend durch erneutes Öffnen der Ventile 72 und 76 können die beiden Fluidkreisläufe 14 und 16 zusammen mit dem ersten Fluidkreislauf 12 weiter gekühlt werden, sobald darin eine entsprechende Temperatur erreicht wird.

Nach dem Abkühlen, das heißt, wenn sämtliche Solltemperaturen erreicht sind, können die beiden Pumpen 52 und 54 angehalten werden. Die Ventile 36 und 38 werden geschlossen und die Ventile 26 und 28 vollständig geöffnet und auch die Ventile 66 und 68 vollständig geschlossen. Auch die Bypassventile 76 und 72 werden geschlossen.

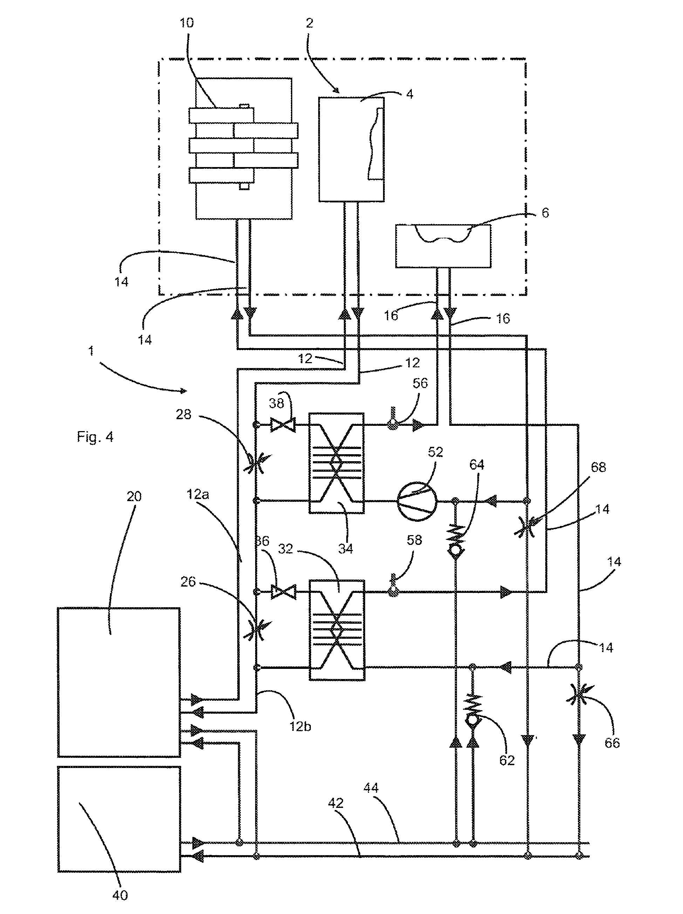

Figur 4 zeigt eine weitere Ausführungsform einer erfindungsgemäßen Vorrichtung. Hier sind zwar ebenfalls zwei Wärmetauscher 32 und 34 vorgesehen, jedoch lediglich ein passiver Kreislauf 14, 16 zur Temperierung sowohl des Formbodens 6 als auch des Formträgers 10. Genauer gesagt sind im Unterschied zu den in den Figuren 2 und 3 gezeigten Vorrichtungen bei der in Figur 4 gezeigten Vorrichtung die beiden Wasserkreisläufe 14, 16 zu einem Kreislauf zusammengefasst. Entsprechend kann auch die in den Figuren 2 und 3 gezeigte Pumpe 54 entfallen. Die übrigen Komponenten sind jedoch in der gleichen Weise ausgeführt.

Der in Figur 4 gezeigten Ausführungsform sind beim Aufheizen ebenfalls die Ventile 36 und 38 geöffnet und die beiden regelbaren Drosseln 66 und 68 zunächst vollständig geschlossen, während mittels der beiden regelbaren Drosseln 26 und 28, die den Durchfluss durch die Wärmetauscher 32 und 34 regeln, die gewünschten Vorlauftemperaturen an den beiden Temperatursensoren 56 und 58 eingestellt wird. Die Regelung wird hier mit vollständig geöffneten regelbaren Drosseln 26, 28 begonnen und der Sollwert der Vorlauftemperatur wird aus der gewünschten Temperatur in der entsprechenden Maschinenkomponente, wie oben erwähnt, sowie einem additiven Korrekturwert, deren Temperaturabfall über der Strecke bis in die Maschine entspricht, vorgegeben.

Aufgrund der niedrigeren Solltemperatur für den Fluidkreislauf 14 des Formträgers 12 wird diese zuerst erreicht. Ab Erreichen dieser Temperatur wird zunächst der Wärmetauscher 32 abgeschaltet, in dem dass Ventil 36 geschlossen wird und die Drossel 26 auf maximalen Durchfluss gestellt wird. Weiterhin wird über die Drossel 66 die Vorlauftemperatur an der Temperaturmesseinrichtung 58 über das Kühlmedium von dem Kühler 40 stabilisiert. Der Wärmetauscher 34 übernimmt ab diesem Punkt die Temperaturdifferenz zwischen dem Rücklauf des Fluidkreislaufs 14 das heißt des Formträgerkreislaufs und der Solltemperatur an der ersten Temperaturmesseinrichtung 56.

Im Betriebsmodus muss für diese Anordnung der Wärmetauscher 34 aktiv bleiben (dass heißt das Ventil 38 ist geöffnet und die regelbare Drossel 28 im eingeschwungenen bzw. geschlossen Zustand). Über die regelbare Drossel 66 wird weiterhin kontinuierlich Kühlmedium zudosiert um die Temperatur an der Temperaturmesseinrichtung 58 zu stabilisieren.

Das Abkühlen der Fluidkreisläufe 12, 14 und 16 wird durch ein Öffnen der Ventile 36 und 38, einer Einstellung der beiden Drosseln 26 und 28 auf minimalen Durchfluss und der beiden Drosseln 66 und 68 auf maximalen Durchfluss erreicht. Dies sollte bevorzugt in Folge einer Absenkung des Sollwertes für die beiden Temperaturmesseinrichtungen 56 und 58 auftreten.

Entsprechend der in Figur 3 gezeigten Bypassschaltung könnte auch bei der in Figur 4 gezeigten Anordnung der Kühlkreisläufe verfahren werden. Nach dem Abkühlen, das heißt, wenn alle Solltemperaturen erreicht sind, kann die Pumpe 52 angehalten werden. Weiterhin werden die beiden Ventile 36 und 38 geschlossen, die Drosseln 26 und 28 vollständig geöffnet und auch die Drosseln 66 und 68 vollständig geschlossen. Falls vorhanden, werden auch die jeweiligen Bypassventile 72, 76 (vgl. Figur 3) geschlossen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Blasform
- 4: Seitenwände bzw. Formteile
- 6: Bodenteil
- 10: Formträger
- 12: erster Fluidkreislauf
- 12a: Vorlauf des ersten Fluidkreislaufs 12
- 12b: Rücklauf des ersten Fluidkreislaufs 12
- 14: zweiter Fluidkreislauf
- 16: dritter Fluidkreislauf
- 20: Heizeinrichtung
- 22, 24: Bypasstrecke (für Wärmetauscher)
- 26, 28: Ventile, Drosseln
- 32: erster Wärmetauscher
- 34: zweiter Wärmetauscher
- 36, 38: Ventile
- 40: Kühler
- 42: Kühlerrücklauf
- 44: Kühlervorlauf
- 52, 54: Pumpe
- 56,58: Temperaturmesseinrichtung
- 62,64: Rückschlagventile
- 66, 68: Drosseln
- 72, 76: Bypassventile
- 74, 78: Bypässe

- 100: Vorrichtung
- 112: erster Fluidkreislauf (Stand der Technik)
- 114: zweiter Fluidkreislauf (Stand der Technik)
- 116: dritter Fluidkreislauf (Stand der Technik)
- 120: erste Heizeinrichtung (Stand der Technik)
- 122: dritte Heizeinrichtung (Stand der Technik)
- 124: zweite Heizeinrichtung (Stand der Technik)
- 140: Kühleinrichtung (Stand der Technik)
- 142: Kühlkreislauf (Stand der Technik)

## Patentansprüche

1. Vorrichtung zum Umformen von Kunststoffvorformlingen zu Kunststoffbehältnissen mit einer Blasform (2), die innerhalb eines Formträgers (10) angeordnet ist, wobei die Blasform (2) wenigstens eine Seitenwand (4) und einen Boden (6) aufweist, gegen welche die Kunststoffvorformlinge expandierbar sind, und wobei wenigstens ein erster Fluidkreislauf (12) vorgesehen ist, um die Seitenwand (4) zu temperieren, und wenigstens ein weiterer Fluidkreislauf (16), um den Boden (6) zu temperieren und wobei in wenigstens einem Fluidkreislauf (12) wenigstens eine Heizeinrichtung (20) vorgesehen ist, um das in diesem Fluidkreislauf (12) fließende Fluid zu erwärmen, **dadurch gekennzeichnet, dass**
wenigstens ein erster Wärmetauscher (32) vorgesehen ist, welcher wenigstens zeitweise Wärme von dem ersten Fluidkreislauf (12) auf wenigstens einen weiteren Fluidkreislauf (16) überträgt wobei die Vorrichtung lediglich eine aktive Heizeinrichtung (20) aufweist und die Vorrichtung wenigstens einen Kühlkreislauf aufweist, um zumindest einen weiteren Fluidkreislauf (16) mit Kühlmittel zu versorgen.

2. Vorrichtung nach Anspruch 1,
**dadurch gekennzeichnet, dass**
der Wärmetauscher (32) die einzige Wärmequelle des weiteren Fluidkreislaufs (14) ist.

3. Vorrichtung nach wenigstens einem der vorangegangenen Ansprüche,
**dadurch gekennzeichnet, dass**
die Vorrichtung einen zweiten Fluidkreislauf (14) aufweist, um den Formträger (10) zu temperieren.

4. Vorrichtung nach wenigstens einem der vorangegangenen Ansprüche, **dadurch gekennzeichnet, dass**
die Vorrichtung (1) einen zweiten Wärmetauscher (34) aufweist, welcher Wärme von dem ersten Fluidkreislauf (12) in den dritten Fluidkreislauf (16) überträgt.

5. Vorrichtung nach wenigstens einem der vorangegangenen Ansprüche, **dadurch gekennzeichnet, dass**
in wenigstens zwei unterschiedlichen Fluidkreisläufen (12, 14, 16) unter schiedliche Fluide strömen.

6. Vorrichtung nach wenigstens einem der vorangegangenen Ansprüche, **dadurch gekennzeichnet, dass**
wenigstens ein Wärmetauscher (32) in einem Rücklauf (12a) des ersten Fluid kreislaufs (12) angeordnet ist.

7. Vorrichtung nach wenigstens einem der vorangegangenen Ansprüche, **dadurch gekennzeichnet, dass**
in der Strömungsrichtung des Fluids in dem ersten Fluidkreislauf (12) zu nächst die zweite Wärmetauschereinrichtung (34) und anschließend die erste Wärmetauschereinrichtung (32) angeordnet ist.

8. Vorrichtung nach wenigstens einem der vorangegangenen Ansprüche, **dadurch gekennzeichnet, dass**
Steuermittel (36, 38) zum Steuern des Durchflusses des in dem ersten Fluid kreislauf (12) durch wenigstens einen Wärmetauscher (32, 34) strömenden Fluids vorgesehen sind.

9. Vorrichtung nach wenigstens einem der vorangegangenen Ansprüche,
**dadurch gekennzeichnet, dass**
wenigstens ein Wärmetauscher (32, 34) als Plattenwärmetauscher ausgeführt ist.

10. Vorrichtung nach wenigstens einem der vorangegangenen Ansprüche,
**dadurch gekennzeichnet, dass**
die Vorrichtung (1) eine Streckblasmaschine ist.

11. Vorrichtung nach wenigstens einem der vorangegangenen Ansprüche,
**dadurch gekennzeichnet, dass**
wenigstens in dem zweiten Fluidkreislauf (14) und/oder dem dritten Fluidkreis lauf (16) eine Temperaturmesseinrichtung (56, 58) vorgesehen ist.

12. Verfahren zur Temperierung von Blasformen zum Umformen von Kunststoffvorformlingen zu Kunststoffbehältnissen, wobei eine Seitenwand (4) für eine Blasform (2) mit einem ersten Fluidkreislauf (12) temperiert und insbesondere erwärmt wird und ein Boden (6) der Blasform (2) mit einem weiteren Fluidkreislauf (16) temperiert und insbesondere erwärmt wird und die Fluidkreisläufe (12, 16) getrennt voneinander sind, wobei das Fluid in einem der Fluidkreisläufe (12, 16) mittels einer Heizeinrichtung (20) erwärmt wird,
**dadurch gekennzeichnet, dass**
das in wenigstens dem weiteren Fluidkreisläufen (16) strömende Fluid mittels einem ersten Wärmetauscher (32) temperiert und insbesondere erwärmt wird, welcher Wärmetauscher Wärme von dem aktiv erwärmten Fluidkreislauf (12) in diesen Fluidkreislauf (16) überträgt wobei lediglich lediglich eine aktive Heizeinrichtung (20) vorgesehen ist sowie wenigstens ein Kühlkreislauf aufweist, um zumindest einen weiteren Fluidkreislauf (16) mit Kühlmittel zu versorgen.

13. Verfahren nach Anspruch 2,
**dadurch gekennzeichnet, dass**
ein Formträger (12) der Blasform (2) mit einem zweiten Fluidkreislauf (14) temperiert und insbesondere erwärmt wird.

## Claims

1. An apparatus for shaping plastics material pre-forms into plastics material containers with a blow mould (2) which is arranged inside a mould carrier (10), wherein the blow mould (2) has at least one lateral wall (4) and a base (6) against which the plastics material pre-forms are capable of being expanded, and wherein at least one first fluid circuit (12) is provided in order to temper the lateral wall (4), and at least one further fluid circuit (16) in order to temper the base (6), and wherein at least one heating device (20) is provided in at least one fluid circuit (12) in order to heat the fluid flowing in this fluid circuit (12), **characterized in that** at least one first heat exchanger (32) is provided which transmits heat from the first fluid circuit (12) to at least one further fluid circuit (16) at least for a time, wherein the apparatus has only one active heating device (20) and the apparatus has at least one cooling circuit in order to supply at least one further fluid circuit (16) with coolant.

2. An apparatus according to claim 1, **characterized in that** the heat exchanger (32) is the sole heat source of the further fluid circuit (14).

3. An apparatus according to at least one of the preceding claims, **characterized in that** the apparatus has a second fluid circuit (14) in order to temper the mould carrier (10).

4. An apparatus according to at least one of the preceding claims, **characterized in that** the apparatus (1) has a second heat exchanger (34) which transmits heat from the first fluid circuit (12) into the third fluid circuit (16).

5. An apparatus according to at least one of the preceding claims, **characterized in that** different fluids flow in at least two different fluid circuits (12, 14, 16).

6. An apparatus according to at least one of the preceding claims, **characterized in that** at least one first heat exchanger (32) is arranged in a return line (12a) of the first fluid circuit (12).

7. An apparatus according to at least one of the preceding claims, **characterized in that** first the second heat exchanger device (34) and then the first heat exchanger device (32) are arranged in the first fluid circuit (12) in the flow direction of the fluid.

8. An apparatus according to at least one of the preceding claims, **characterized in that** control means (36, 38) are provided to control the through-flow of the fluid flowing through at least one heat exchanger (32, 34) in the first fluid circuit (12).

9. An apparatus according to at least one of the preceding claims, **characterized in that** at least one heat exchanger (32, 34) is designed in the form of a plate-type heat exchanger.

10. An apparatus according to at least one of the preceding claims, **characterized in that** the apparatus (1) is a stretch blow moulding machine.

11. An apparatus according to at least one of the preceding claims, **characterized in that** a temperature measuring instrument (56, 58) is provided at least in the second fluid circuit (14) and/or in the third fluid circuit (16).

12. A method of tempering blow moulds for shaping plastics material pre-forms into plastics material containers, wherein a lateral wall (4) for a blow mould (2) is tempered, and in particular heated, with a first fluid circuit (12) and a base (6) of the blow mould (2) is tempered, and in particular heated, with a further fluid circuit (16), and the fluid circuits (12, 16) are separate from each other, wherein the fluid is heated in one of the fluid circuits (12, 16) by means of a heating device (20), **characterized in that** the fluid flowing in at least the further fluid circuits (16) is tempered, and in particular heated, by means of at least one first heat exchanger (32), which heat exchanger transmits heat from the actively heated fluid circuit (12) into this fluid circuit (16), wherein only one active heating device (20) is provided and has at least one cooling circuit in order to supply at least one further fluid circuit (16) with coolant.

13. A method according to claim 12, **characterized in that** a mould carrier (12) of the blow mould (2) is tempered, and in particular heated, with a second fluid circuit (14).

## Revendications

1. Installation de transformation de préformes en matière plastique en récipients en matière plastique, avec un moule de soufflage (2) disposé à l'intérieur d'un support de moule (10), le moule de soufflage (2) comportant au moins une paroi latérale (4) et un fond (6) contre lesquels les préformes en matière plastique peuvent être expansées, au moins un premier circuit de fluide (12) étant prévu pour l'équilibrage de température de la paroi latérale (4) ainsi qu'au moins un autre circuit de fluide (16) pour l'équilibrage de température du fond (6), et au moins un dispositif de chauffage (20) étant prévu dans au moins un circuit de fluide (12) pour le chauffage du fluide circulant dans ce circuit de fluide (12),
**caractérisée en ce qu'**
au moins un premier échangeur de chaleur (32) est prévu, lequel transmet au moins temporairement de la chaleur du premier circuit de fluide (12) à au moins un autre circuit de fluide (16), ladite installation ne comportant qu'un seul dispositif de chauffage (20) actif, et ladite installation comportant au moins un circuit de refroidissement pour alimenter en réfrigérant au moins un autre circuit de fluide (16).

2. Installation selon la revendication 1,
**caractérisée en ce que**
l'échangeur de chaleur (32) est la seule source de chaleur de l'autre circuit de fluide (14).

3. Installation selon au moins une des revendications précédentes,
**caractérisée en ce que**
ladite installation comporte un deuxième circuit de fluide (14) pour l'équilibrage de température du support de moule (10).

4. Installation selon au moins une des revendications précédentes,
**caractérisée en ce que**
ladite installation (1) comporte un deuxième l'échangeur de chaleur (34), lequel transmet de la chaleur du premier circuit de fluide (12) au troisième circuit de fluide (16).

5. Installation selon au moins une des revendications précédentes,
**caractérisée en ce que**
des fluides différents circulent dans au moins deux circuits de fluide (12, 14, 16) différents.

6. Installation selon au moins une des revendications précédentes,
**caractérisée en ce qu'**
au moins un échangeur de chaleur (32) est disposé dans un retour (12a) du premier circuit de fluide (12).

7. Installation selon au moins une des revendications précédentes,
**caractérisée en ce que**,
dans la direction de circulation du fluide, le deuxième dispositif échangeur de chaleur (34) d'abord, suivi du premier dispositif échangeur de chaleur (32) sont disposés dans le premier circuit de fluide (12).

8. Installation selon au moins une des revendications précédentes,
**caractérisée en ce que**
des moyens de commande (36, 38) sont prévus pour commander le débit du fluide circulant dans le premier circuit de fluide (12) par au moins un échangeur de chaleur (32, 34).

9. Installation selon au moins une des revendications précédentes,
**caractérisée en ce qu'**
au moins un échangeur de chaleur (32, 34) est réalisé sous forme d'échangeur de chaleur à plaques.

10. Installation selon au moins une des revendications précédentes,
**caractérisée en ce que**
ladite installation (1) est une machine d'étirage-soufflage.

11. Installation selon au moins une des revendications précédentes,
**caractérisée en ce qu'**
un dispositif de mesure de température (56, 58) est prévu au moins dans le deuxième circuit de fluide (14) et/ou le troisième circuit de fluide (16).

12. Procédé d'équilibrage de température de moules de soufflage pour la transformation de préformes en matière plastique en récipients en matière plastique, dans lequel la température d'une paroi latérale (4) pour un moule de soufflage (2) est équilibrée, et en particulier augmentée, par un premier circuit de fluide (12), dans lequel la température d'un fond (6) du moule de soufflage (2) est tempérée, et en particulier augmentée, par un autre circuit de fluide (16), et dans lequel les circuits de fluide (12, 16) sont séparés l'un de l'autre, le fluide étant chauffé au moyen d'un dispositif de chauffage (20) dans un des circuits de fluide (12, 16),
**caractérisé en ce que**
la température du fluide circulant dans au moins l'autre circuit de fluide (16) est équilibrée, et en particulier augmentée, au moyen d'un premier échangeur de chaleur (32), ledit échangeur de chaleur transmettant audit circuit de fluide (16) de la chaleur du circuit de fluide (12) activement chauffé, un seul dispositif de chauffage (20) actif étant prévu, et au moins un circuit de refroidissement étant présenté pour alimenter en réfrigérant au moins un autre circuit de fluide (16).

13. Procédé selon la revendication 2,
**caractérisé en ce que**
la température d'un support de moule (12) du moule de soufflage (2) est équilibrée, et en particulier augmentée, par un deuxième circuit de fluide (14).
